# EUROPÄISCHE PATENTANMELDUNG

(11) **EP 0 532 846 A2**
(43) Veröffentlichungstag der Anmeldung: **24.03.1993**
(21) Anmeldenummer: 92111097.9
(22) Anmeldetag: 01.07.1992
(51) Int. Cl.: B29B 17/00, B29C 49/04, B29K 23/00, B29K 105/26, B29L 7/00

(54) **Verfahren zur Herstellung von Produkten aus Polyolefin-Kunststoffabfällen sowie Anlage zur Durchführung eines solchen Verfahrens**

(30) Priorität: 18.09.1991 DE 4131007; 20.01.1992 DE 4201330; 21.05.1992 DE 4216858
(71) Anmelder: KUHNE ANLAGENBAU GmbH, D-53757 Sankt Augustin (DE)
(72) Erfinder: Kuhne, Peter, Dipl.-Ing., W-5202 Hennef, Greuelsifen (DE); Schlösser,Helmut, W-5202 Hennef 1 (DE)
(74) Vertreter: von Rohr, Hans Wilhelm, Dipl.-Phys.

(57) **Zusammenfassung**

Gegenstand der Erfindung sind Verfahren zur Herstellung von Produkten aus Polyolefin-Kunststoffabfällen und ähnlichen Kunststoff-Schwimmfraktionen sowie Anlagen zur Durchführung solcher Verfahren. Wesentlich ist die Einschrittigkeit dieser Verfahren, die auf eine vorherige Regranulation des Ausgangsmaterials verzichtet. Besonders geeignet ist diese Technik für Kunststoffabfälle aus Kunststoffolien wie Verpackungen und Tragetaschen. In einer zweistufigen Anlage lassen sich in einer zwischengeschalteten Entgasungsstufe auch leichtflüchtige Bestandteile, insbesondere Druckfarben entgasen.

## Beschreibung

Die Erfindung betrifft ein Verfahren zur Herstellung von Produkten aus Polyolefin-Kunststoffabfällen mit den Merkmalen des Oberbegriffs von Anspruch 1 sowie eine Anlage zum gleichen Zweck.

Aus dem Stand der Technik ist es bekannt, daß man mit bestimmten Recycling-Verfahren größere Produkte aus Kunststoffabfällen, und zwar u. a. auch aus Polyolefin-Kunststoffabfällen herstellen kann (Steiner, "Recycling von Kunststoffabfällen", Kunststoffe 74 (1984), Seiten 186 bis 194). Die dort geschilderte Recycloplast-Anlage verwendet Kunststoff aus Hausmüll, beispielsweise auch vorsortierte Polyolefin-Kunststoffabfälle, ohne oder mit Farben versetzt. Auf derartige Leicht-Fraktionen von Kunststoffabfällen bezieht sich die Lehre der Erfindung in erster Linie, wenn auch nicht ausschließlich. Die bekannte Recycloplast-Anlage hat eine Zerkleinerungsanlage, nachfolgend eine mechanische oder pneumatische Förderung, danach einen Materialbunker mit einem Rührwerk und dem nachgeordnet einen Plastifikator mit vorgeschaltetem Stopfwerk. Dieser Plastifikator ist gegen grobe Verschmutzung unempfindlich, da er mit einem Glattwalzenextruder mit nachstellbarer Materialzonentiefe arbeitet. Das vorgeschaltete Stopfwerk soll die Materialdichte im Eintritt des Walzenextruders auf das erforderliche Maß erhöhen. Eine volumetrische Plastifikat-Dosierstufe ist nachgeschaltet, an die eine automatische Formenbeschickung angeschlossen ist.

Das aus diesem Stand der Technik bekannte Verfahren und die dadurch beschriebene Anlage eignet sich nur zur Herstellung dickwandiger Kunststoff-Formkörper. Diese wären aus Kostengründen aus Neumaterial nicht zu realisieren, finden aber häufig Anwendungen, wo bislang andere Werkstoffe, z. B. Holz, Beton, Asbest-Zement, verwendet wurden. Beispielsweise werden Gitterblökke für Bankett-Befestigungen an Landstraßen und Autobahnen, Gitterblocksegmente etc. damit hergestellt. Dünnwandige Kunststoff-Formkörper sind damit nicht zu realisieren, da die Verschmutzungen im Material keine hinreichende Wandungs-Qualität zulassen und der Glattwalzenextruder nicht hinreichend homogenisiert. An eine Folienherstellung ist mit einem solchen Verfahren und einer solchen Anlage nicht zu denken.

Der Erfindung liegt die Aufgabe zugrunde, ein Verfahren anzugeben, mit dem man aus Polyolefin-Kunststoffabfällen od. dgl., insbesondere also aus Folienabfällen, wiederum relativ dünne Kunststoffolien herstellen kann. Gegenstand der Erfindung ist auch die Angabe einer dafür geeigneten Anlage.

Zunächst ist die zuvor aufgezeigte Aufgabe verfahrenstechnisch mit den Merkmalen des Anspruchs 1 gelöst. Das erfindungsgemäße Verfahren zeichnet sich dadurch aus, daß es einschrittig abläuft, also eine vorherige Regranulation der zerkleinerten Kunststoffabfälle nicht erforderlich ist. Dieses Verfahren arbeitet mit einer Extruderstufe mit Schneckenextruder, in die das Ausgangsmaterial mittels des Beschickungsaggregates hineingedrückt wird. Das Beschickungsaggregat ist beispielsweise eine an sich bekannte, relativ schnell laufende Stopfschnecke kleinen Durchmessers, die die Verarbeitungsdichte des Materials im Eintritt der Extruderstufe schon etwas erhöht. In der Extruderstufe selbst wird eine erhebliche Erhöhung der Verarbeitungsdichte des Materials erreicht, die es erlaubt, am Ausgang der Extruderstufe direkt in eine Dosierstufe und den anschließenden Austrittskopf hineinzuarbeiten.

Bei Einsatz sehr einheitlicher Kunststoffabfälle kann auf eine einen konstanten Volumenstrom am Austrittskopf erzeugende Dosierstufe verzichtet werden, da schon der Schneckenextruder selbst eine hinreichende Homogenität und damit einen hinreichend konstanten Volumenstrom am Austritt bereitzustellen vermag. Ansonsten empfiehlt es sich, über eine einen konstanten Volumenstrom erzeugende Dosierstufe zu arbeiten.

Das zuvor erläuterte erfindungsgemäße Verfahren ist insbesondere bei im wesentlichen sauberen und nicht mit ausgasenden Zusätzen, insbesondere Farben, versetzten Polyofin-Kunststoffabfällen einsetzbar. Es handelt sich insbesondere um ein sehr einfaches und preisgünstiges einstufiges Verfahren, mit dem große Mengen an sauberen, nicht bedruckten Verpackungsfolien in einem einschrittigen System wieder zu neuen dünnen Kunststoffolien recyclet werden können.

Besonders empfiehlt sich in Verbindung mit dem zuvor erläuterten erfindungsgemäßen Verfahren jedoch der Einsatz einer Filterstufe am Ende der Extruderstufe, in der nicht vergaste feststoffartige Unreinheiten aus der Masse herausgefiltert werden (Anspruch 2). Auch bei im wesentlichen sauberen Kunststoffabfällen bleiben Verunreinigungen im Material, die beispielsweise von aufgeklebten Papierstreifen, aber auch von Einschlüssen im Ausgangsmaterial selbst her rühren können. Auch geringe Verschmutzungen durch Staub, Sand od. dgl. sind auch bei im wesentlichen sauberem Ausgangsmaterial nicht auszuschließen. Diese werden durch die Filterstufe herausgeholt, bevor die plastifizierte Masse dem Austrittskopf zuströmt.

Mit dem erfindungsgemäßen Verfahren lassen sich Rohfolien herstellen, aus denen dann wieder Folgeprodukte wie konfektionierte Folien, Taschen, Säcke hergestellt werden, die dann eben auch vollständig aus recycelten Kunststoffabfällen bestehen.

Insbesondere Müllsäcke sind hier ein interessanter Verwendungsbereich.

Das erfindungsgemäße Verfahren macht es möglich, ausschließlich oder nahezu ausschließlich thermoplastische Kunststoffabfälle, die insbesondere von gebrauchten Verpackungsmaterialien stammen können, zur Herstellung von Rohfolien und konfektionierten Produkten daraus zu verwenden. Liegt im wesentlichen sauberes, also nur leichte Verschmutzungen aufweisendes Ausgangsmaterial vor, so kann eine Vorreinigung unterbleiben, bei stark verschmutztem Ausgangsmaterial, beispielsweise bei aus der Landwirtschaft stammenden Abdeckungsfolien, sollte eine Wäsche vorgeschaltet werden.

Dann, wenn mit einer Dosierpumpe vor dem Austrittskopf gearbeitet wird, die dem Austrittskopf den erforderlichen konstanten Volumenstrom zuführt, kann das erfindungsgemäße Verfahren auch mit beliebigen Mischungen unterschiedlicher Polyolefin-Kunststoffabfälle betrieben werden. Das Ausgangsmaterial kann insbesondere aus Polyolefin-Kunststoffabfällen niedriger und mittlerer bis höherer Dichte gemischt sein. Vorzugsweise kann man es aus mehr als 40 % bis zu 100 % Polyolefin-Kunststoffabfällen niedriger Dichte, insbesondere LDPE, LLDPE, und dem Rest Polyolefin-Kunststoffabfällen mittlerer bis höherer Dichte, insbesondere HDPE, und gegebenenfalls weiteren Stoffen in geringer Menge zusammenstellen. Die Qualität des Endprodukts ist Dank der erfindungsgemäßen Vorgabe eines konstanten Volumenstroms in weiten Grenzen von den Mischungsverhältnissen unabhängig. Man kann also nach dem Anfall an Kunststoffabfällen mischen, beispielsweise bei hohem Anteil von Schrumpffolien und geringerem Anteil von Strechfolien auch mit hohem Schrumpffolienanteil und geringem Strechfolienanteil arbeiten.

Das im Anspruch 3 beschriebene erfindungsgemäße Verfahren ist im Grundsatz gleich vorteilhaft für die zuvor näher erläuterten Kunststoffabfälle, insbesondere Kunststoffolien-Abfälle verwendbar. Seine besondere Bedeutung gewinnt das Verfahren nach Anspruch 3 aber dadurch, daß durch die Filterung und die Aufteilung eine Entgasung des Materials stattfinden kann, so daß auch mit leichtflüchtigen Bestandteilen versetzte, insbesondere mit Farben versetzte Polyolefin-Kunststoffabfälle, insbesondere also bedruckte Folien, recycelt werden können. Für dieses Verfahren ist zunächst das wesentlich, was im Zusammenhang mit dem Verfahren nach Anspruch 1 schon erläutert worden ist. Hinzu kommt, daß mit zwei Extruderstufen und einer zwischengeschalteten Eintgasungsstufe gearbeitet wird. In der Entgasungsstufe wird durch vielfache Aufteilung die Oberfläche des Materials vergrößert, beispielsweise indem über eine Mehrfachdüse die plastifizierte und auf hohe Temperatur gebrachte Kunststoffmasse in Fäden ausgestoßen wird, die dann wegen Viskosität als Tropfen im freien Fall in die Einfüllöffnung der zweiten Extruderstufe hineinfallen. Dadurch ergibt sich eine maximale Oberfläche, die es den in der plastifizierten Kunststoffmasse eingeschlossenen Gasen erlaubt, mit hohem Wirkungsgrad auszutreten. Der Entgasungseffekt ist weit besser als in einer mit üblichen Entgasungs-Vorrichtungen versehenen Extruderstufe. Damit ist eine erste wesentliche Quelle für Verunreinigungen im Endprodukt eliminiert. Wesentlich ist aber auch die Einwirkung der Filterstufe, die hier schon der ersten Extruderstufe nachgeschaltet ist. Das erlaubt es, die heiße Kunststoffmasse von feststoffartigen Unreinheiten zu befreien, die u. a. auch aus vercrackten Farbrückständen bestehen können. Danach kann die Kunststoffmasse unproblematisch in der Mehrfachdüse fadenartig bzw. tropfenartig zu großer Oberfläche zum Zwecke der Entgasung gebracht werden. Die Masse wird anschließend, und das ist ein weiterer wesentlicher Schritt des erfindungsgemäßen Verfahrens, erneut homogenisiert, so daß die anschließend in normaler Weise verarbeitet und volumetrisch dem Austrittskopf zugeführt werden kann. Im übrigen gilt auch hier die vorzugsweise Verwendung einer anschließenden Dosierstufe mit Dosierpumpe, falls das volumentrische Ergebnis der zweiten Extruderstufe nicht ausreicht.

Beim Austrittskopf handelt es sich um einen Folienblaskopf, der gut arbeitet, weil ihm ein konstanter Volumenstrom von der (zweiten) Extruderstufe direkt oder von der Dosierpumpe zugeführt wird.

Die Ausgasung in der Zwischenstufe zwischen der ersten und der zweiten Extruderstufe besonders positiv dadurch beeinflußt, daß die Temperatur in der ersten Extruderstufe höher als eigentlich erforderlich für die Plastifizierung gewählt wird. Hier kommen Temperaturen von mindestens 170 in Frage, die jedoch eine Grenze vermutlich bei ca. 240 C, weil dann möglicherweise Crack-Produkte entstehen, die zu negativen Einflüssen führen.

In der zweiten Extruderstufe kann man dann die Temperatur wieder auf die normale Arbeitstemperatur des Materialstroms zurückführen (Anspruch 7).

Anspruch 8 befaßt sich mit der Aufdosierung und der Erhalt eines niedrigen Innendrucks der Masse in einem Entgasungsschacht, wodurch die Entgasung der plastifizierten Kunststoffmasse nochmals deutlich verbessert wird.

Nach weiterer Lehre, der besondere Bedeutung zukommt, gilt gemäß Anspruch 9, daß der Kunststoffstrom eingang des Austrittskopfes in zwei Teilströme aufgeteilt wird. Dadurch, daß die beiden Teilströme über zwei einander zugeordnete Folienblasdüsen zur Bildung einer Zweischichtfolie ausgestoßen werden, kann für den Fall, daß eine Verunreinigung durch die Filterstufe nicht herausgefiltert wurde un din den Austrittskopf gelangt, diese Verunreingung nur mit einem der beiden Teilströme ausgetragen werden. Die Wahrscheinlichkeit, daß eine andere Verunreinigung, ausgetragen im zweiten Teilstrom, gerade an dieselbe Stelle gelant, ist sehr gering. Die Sicherheit ist groß, die die extrudierte Zweischichtfolie, sie es nun eine Flachfolie oder eine Schlauchfolie, an dieser Stelle eben kein Loch hat. Diese Verfahrenstechnik, Zweischicht-Extrusion, ist für die Lehre der Erfindung zur Erzielung perfekter Endprodukte von erheblicher Bedeutung. Die Zweischicht-Technik ist nämlich einfacher zu realisieren als eine perfektionierte Filtertechnik, die nur mit sehr großem Aufwand realisierbar wäre. Es bliebe ggf. ohnehin noch die Rest-Verunreinigung aus nicht ausgegasten Rückständen. Die Zweischichtextrusion eignet sich für die Schlauchfolienextrusion in besonderem Maße.

Als Alternative zu dem erfindungsgemäßen Verfahren mit realtiv später Aufteilung des plastifizierten Kunststoffstroms in zwei Teilströme kann es sich auch empfehlen, daß auf gleiche Weise Kunststoffströme parallel erzeugt werden und jeder Kunststoffstrom einer Folienblasdüse von zwei für Zweischichten-Extrusion vorgesehenen Folienblasdüse zugeführt wird.

Die Verfahrenstechnik für die Zweischichten-Extrusion ist ausgefeilt, die beiden Schichten werden durch die beiden Folienblasdüsen ausgestoßen und dadurch zusammengeführt oder ausgestoßen, zusammengeführt und dann nochmals durch einen gemeinsamen Austrittsspalt geführt.

Was die Regelung des erfindungsgemäßen Verfahrens betrifft, so ist Anspruch 11 von Bedeutung.

Mit dem erfindungsgemäßen Verfahren kann eine auch betriebswirtschaftlich sehr sinnvolle Kooperation zwischen Hersteller und Kunststoffolien, bei spielsweise auch von Tragetaschen, einerseits und dem gewerbsmäßigen Verwender von Verpakkungsfolien, Tragetaschen etc., der diese Verpakkungen ja auch wieder zurücknehmen muß, erzielt werden. Für durch leichtflüchtige Bestandteile verunreinigte Kunststoffabfälle, insbesondere Folien-Kunststoffabfälle liegen die wesentlichen Merkmale des erfindungsgemäßen Verfahrens in der optimalen Ausgasung der Kunststoffmasse, insbesondere einerseits durch Erhöhung der Temperatur in der ersten Extruderstufe, andererseits durch die Ausgasung unter Vakuum, und weiter im nochmaligen Homogenisieren der aus verschiedenen AusgangsBestandteilen bestehenden Masse in der zweiten Extruderstufe. Wesentlich ist auch die Nutzung der volumentrischen Dosierung der Masse in den Austrittskopf zum Ausgleich unterschiedlicher Drücke von unterschiedlichen Materialien im Ausgangsmaterial und schließlich die Aufteilung in zwei Teilströme oder Verwendung von zwei separaten Kunststoffströmen zur Herstellung von Zweischicht-Folien, so daß Lochbildung bei Verunreinigungen vermieden wird.

Im Rahmen des erfindungsgemäßen Verfahrens können im Anschluß an die Extrusion über den Folienblaskopf übliche Techniken der Flachfolienextrusion oder Schlauchfolienextrusion - Stützführung, Kühlung od. dgl. - eingesetzt werden, die hier nicht weiter erläutert werden müssen.

Die anlagentechnischen Merkmale der Erfindung sind Gegenstand der Ansprüche 12 und folgende. Diese Ansprüche folgen im Grundsatz den gleichen Überlegungen, die zuvor zum Verfahren in den beiden Alternativen - einstufig, zweistufig - ausgeführt worden sind.

Im folgenden werden bevorzugte Ausführungsbeispiele einer erfindungsgemäßen Anlage anhand der Zeichnung beschrieben. In der Zeichnung zeigt
Fig. 1 in einer schematischen Ansicht, von der Seite gesehen, ein erstes Ausführungsbeispiel einer erfindungsgemäßen Anlage,
Fig. 2 die Anlage aus Fig. 1 in einer Draufsicht,
Fig. 3 den Anfangsbereich einer Extruderstufe einer Anlage aus Fig. 1, stark vergrößert, schematich dargestellt, in einem bevorzugten Ausführungsbeispiel und
Fig. 4 in einer schematischen Ansicht, von der Seite gesehen, ein weiteres Ausführungsbeispiel einer erfindungsgemäßen Anlage.

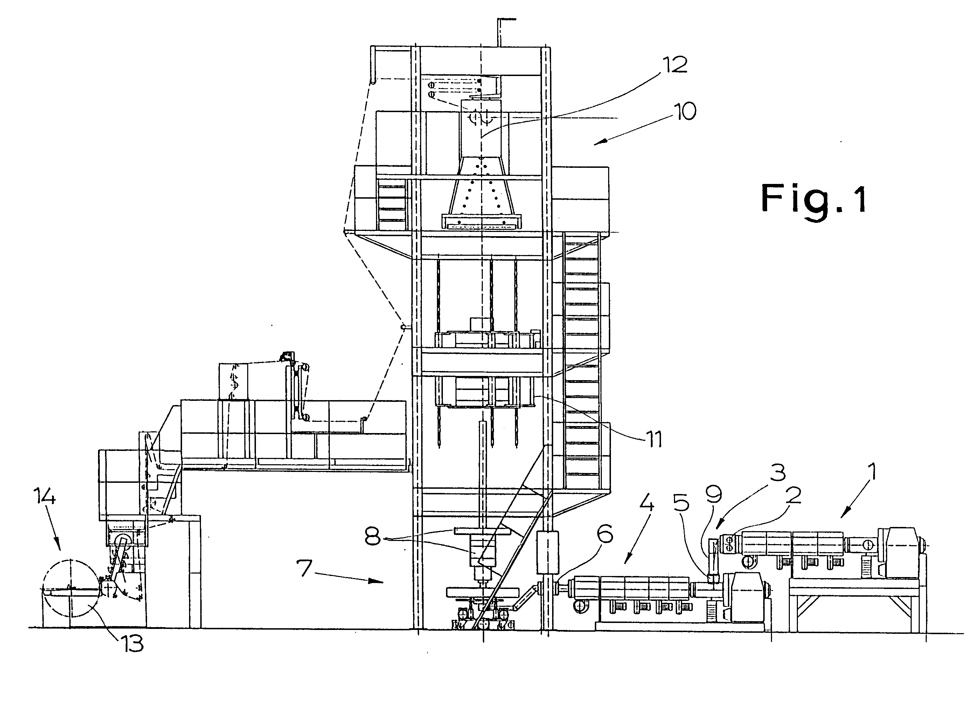

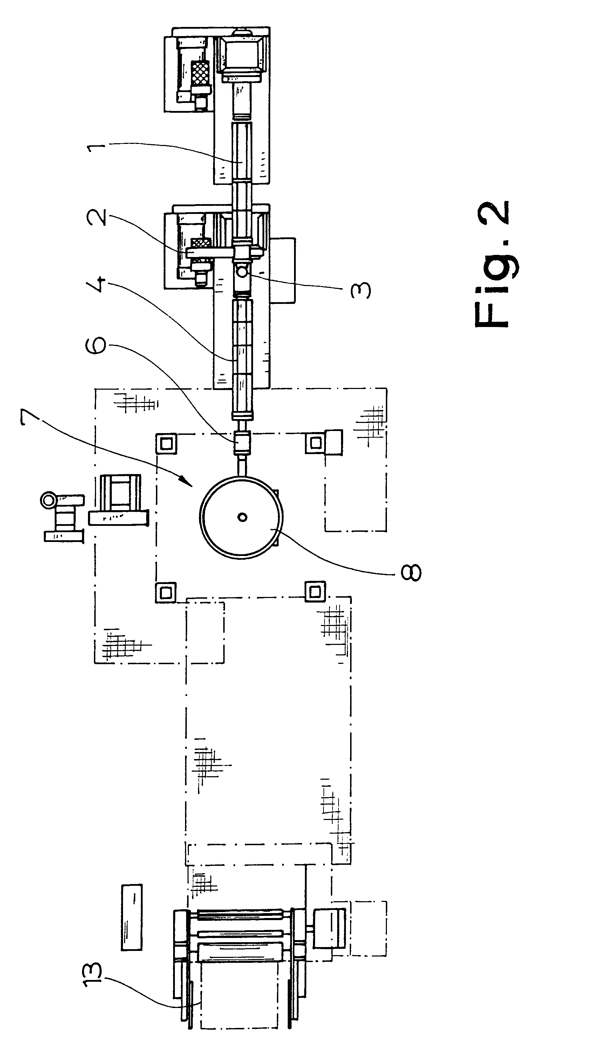

Bei der in Fig.1 und 2 zunächst im Grundsatz dargestellten Anlage handelt es sich um eine Anlage zur Herstellung von Produkten aus Polyolefin-Kunststoffabällen (HDPE, LDPE, LLDPE, PP etc.) und ähnlichen Kunststoff-Schwimmfraktionen, insbesondere aus mit Farben versetzten Polyolefin-Kunststoffabfällen. Die Kunststoffabfälle sind im wesentlichen sauber, was bedeutet, daß sie entweder an sich allenfalls leicht verschmutzt sind, also verstaubt, noch Papierreste von Aufklebern od. dgl. aufweisend, etc. oder, beispielsweise bei stark verschmutzten Landwirtschaftsfolien od. dgl., vorher gewaschen und auf ein zuträgliches Verschmutzungsmaß hin gesäubert worden sind. Sie können in vorzerkleinerter Form vorliegen und ggf. zwischengespeichert werden. Dazu dient ein Materialbunker, der ggf. ein integriertes Rührwerk aufweisen kann. Ein Beschickungsaggregat dient der Beschickung und kann auch die Verarbeitungsdichte des Ausgangsmaterials erhöhen. Ein Beschikkungsaggregat kann beispielsweise ein Stopfwerk in Form einer Stopfschnecke sein.

Dem Beschickungsaggregat ist eine Plastifikatorstufe nachgeordnet, der wiederum ein Austrittskopf für den plastifizierten Kunststoffstrom nachgeordnet ist.

Für die im Anspruch 12 beschriebene erfindungsgemäße Anlage gilt nun zunächst, daß das Ausgangsmaterial mittels des Beschickungsaggregates in den Eintritt der Plastifikatorstufe hineindruckbar ist, daß die Plastifikatorstufe eine als Schneckenextruder ausgeführte Extruderstufe 1 aufweist, in der das Material plastifiziert und homogenisiert wird, daß die Extruderstufe 1 im Anfangsbereich einen sich im Extrusionsrichtung fortschreitend erheblich verringernden Förderquerschnitt aufweist, daß der Extruderstufe 1 als Austrittskopf 7 ein Folienblaskopf nachgeordnet ist, oder eine einen konstanten Volumenstrom abgebende Dosierpumpe 6, insbesondere in Form einer Zahnrad-Schmelzepumpe nachgeordnet ist und daß dieser dann als Austrittskopf 7 ein Folienblaskopf nachgeordnet ist. Auf eine Dosierpumpe 6 kann verzichtet werden, wenn, wie weiter oben erläutert worden ist, das Ausgangsmaterial hinreichend homogen ist und entsprechende Schwankungen in der Materialzusammensetzung ein bestimmtes Maß nicht überschreiten. Ansonsten empfiehlt sich die Realisierung der Dosierstufe mit der Dosierpumpe 6. Diese muß einen konstanten Volumenstrom abgeben, es kann sich beispielsweise um eine Zahnrad-Schmelzepumpe handeln. In jedem Fall sollte dem Austrittskopf 7 in Form eines Folienblaskopfes ein konstanter Volumenstrom zugeführt werden.

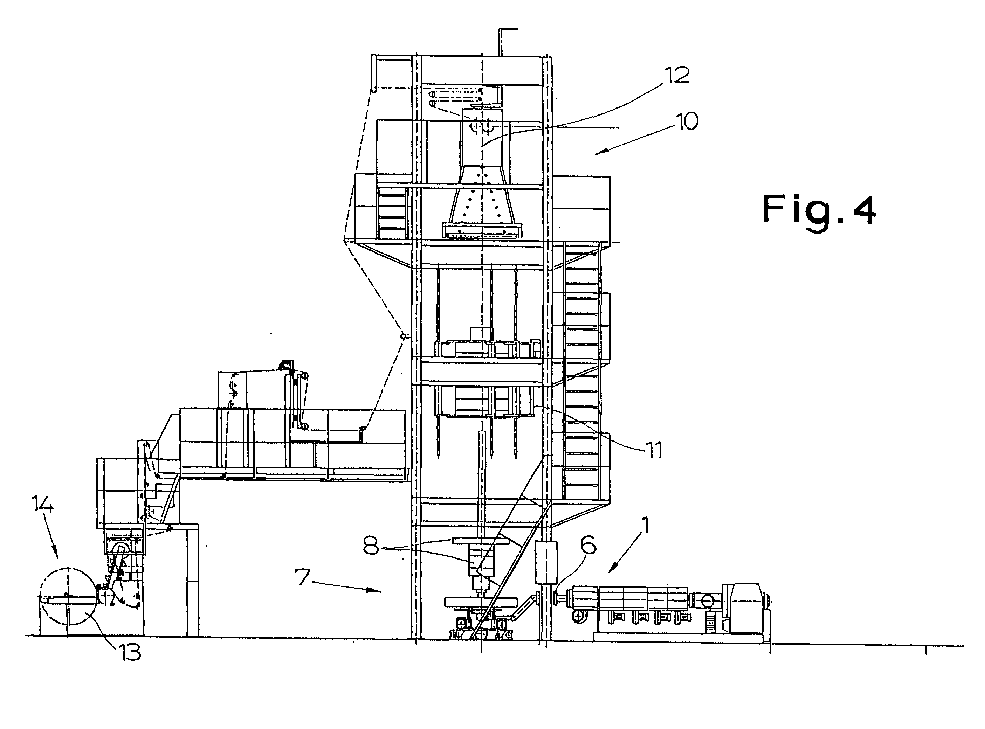

Die zuvor beschriebene Anlage ist in Fig. 4 dargestellt, weitere Erläuterungen dazu finden sich unten. Diese Anlage eignet sich insbesondere dann, wenn das Ausgangsmaterial keine leichtflüchtigen Bestandteile, insbesondere keine Druckfarben aufweist, so daß praktisch keine Entgasung des Materials erforderlich ist. Durch die in Fig. 4 allerdings nicht erkennbare Gestaltung des Anfangsbereiches der Extruderstufe 1 mit sich in Extrusionsrichtung verringerndem Förderquerschnitt wird die erforderliche starke Erhöhung der Verarbeitungsdichte des Ausgangsmaterials in der Extruderstufe 1 selbst möglich, da das Beschickungsaggregat auf einen großen Förderquerschnitt arbeitet, der dann für die eigentliche Plastifizierung und Homogenisierung erheblich verrinert wird.

Auch bei einer Anlage mit nur einer Extruderstufe 1, wie sie in Fig. 4 dargestellt und zuvor beschrieben worden ist, empfiehlt sich der Einsatz einer Filterstufe vor dem Austrittskopf 7. Es empfiehlt sich also, daß an die Extruderstufe 1 eine Filterstufe 2 angeschlossen ist, in der nicht vergaste feststoffartige Unreinheiten aus der Masse herausgefiltert werden, und, vorzugsweise, daß in der Filterstufe 2 ein Zwischenfilter für grobe Verunreinigungen vorgesehen und vorzugsweise als Lochring oder Lochscheibe mit Löchern von vorzugsweise 0,3 bis 0,5 mm im Durchmesser ausgeführt ist und, wiederum vorzugssweise, mit einer messerartig umlaufenden Abstreifkante, die über den Lochring bzw. die Lochplatte schabt, versehen ist. Der Lochring kann auch ein Zylinderring sein, was sogar eine bevorzugte Gestaltung darstellt. Die Abstreifkante ist dann die Außenkante eines schneckenartig gestalteten Abstreifmessers. Eine solche Gestaltung des Zwischenfilters in der Filterstufe hat sich als besonders wirkungsvoll erwiesen.

Wesentlich ist, daß mit der Filterstufe 2 nicht vergaste feststoffartige Unreinheiten aus der Masse herausgefiltert werden, das ist weiter oben im allgemeinen Teil der Beschreibung schon etwas näher erläutert worden.

Das im Anspruch 3 beschriebene Verfahren geht nun davon aus, daß häufig auch mit Farben versetzte Polyolefin-Kunststoffabfälle od. dgl. im Ausgangsmaterial vorhanden sein werden. Diese Farbestandteile aus dem Material herauszubekommen, stellt ein besonderes Problem dar.

Für die insoweit vorgeschlagene erfindungsgemäße Anlage gemäß Anspruch 14 gilt, daß das Ausgangsmaterial mittels des Beschickungsaggregates in den Eintritt der Plastifikatorstufe hineindrückbar ist, daß die Plastifikatorstufe die erste Extruderstufe 1 in Form eines Schneckenextruders vorzugsweise mit Heizeinrichtung aufweist, daß die erste Extruderstufe 1 im Anfangsbereich einen sich in Extrusionsrichtung fortschreitend erheblich verringernden Förderquerschnitt aufweist, daß in der ersten Extruderstufe 1 das Material bei hoher Temperatur plastifiziert wird, wobei vergasungsfähige Unreinheiten im Material, insbesondere Farbrückstände, Flexo-Druckfarben etc., im Durchgang vergast werden, so daß an die erste Extruderstufe 1 die Filterstufe 2 angeschlossen ist, in der nicht vergaste feststoffartige Unreinheiten aus der Masse herausgefiltert werden, daß an die Filterstufe 2 eine Aufteilungsstufe 3 zur vielfachen Aufteilung des Materialstromes angeschlossen ist und daß der Aufteilungsstufe 3 eine zweite Extruderstufe 4 in Form eines Schneckenextruders nachgeordnet ist, deren Eintrittsöffnung 5 mit erheblichem freiem Abstand unter dem Austritt der Aufteilungsstufe 3 liegt und deren Austritt hier an die Dosierstufe 6 angeschlossen ist. Wesentlicher Teil der Dosierstufe 6 ist die Dosierpumpe, die folglich hier mit dem gleichen Bezugszeichen angesprochen wird. Sie gibt einen konstanten Volumenstrom ab und hat insbesondere die Form einer Zahnrad-Schmelzepumpe. Der Dosierstufe / Dosierpumpe 6 ist als Austrittskopf 7 ein Folienblaskopf nachgeordnet.

Man erkennt in Fig. 1 gut die beiden Extruderstufen 1 und 4, zwischen denen die Filterstufe 2 liegt. Über die Filterstufe 2 ist zuvor schon einiges erläutert worden hinsichtlich eines bevorzugten Ausführungsbeispiels. Die Filterstufe 2 könnte auch einen Automatik-Wechselfilter mit Rückspüleinrichtung aufweisen, so daß ein kontinuierlicher Betrieb möglich ist.

Man erkennt weiter die Aufteilungsstufe 3, zu der in Anspruch 15 einiges erläutert ist. Die Dosierstufe / Dosierpumpe 6 ist hingegen nur angedeutet.

Nicht dargestellt ist, daß nach bevorzugter Lehre der Erfindung ein Hosenstück vorgesehen ist, durch das der Kunststoffstrom in zwei Teilströme aufteilbar ist, daß an jedem vom Hosenstück ausgehenden Zweig eine von zwei einander zugeordneten Folienblasdüsen angeschlosen ist und daß deren Ausgangsstrom zusammen über einen Zweischicht-Folienblaskopf 8 weiter verarbeitbar ist. Im dargestellten Ausführungsbeispiel schließt sich an den Zweischicht-Folienblaskopf 8 eine komplette Schlauchfolien-Blas- und Abzugsanlage an, die in ihrem grundsätzlichen Aufbau nachher noch kurz erläutert wird.

Im einzelnen wird auf die weitere Erläuterung durch Anspruch 16 verwiesen. Nicht dargestellt ist, daß das Entgasungsgehäuse 9 an die Vakuum-Gasabsaugpumpe angeschlossen ist. Die Vakuum-Gasabsaugpumpe ist insgesamt nicht dargestellt. Besonders bevorzugt ist es, wenn diese ein Vakuum von unter 100 mbar in dem Entgasungsgehäuse 9 zu erzeugen vermag. Die Bedeutung erhöhter Temperatur in der ersten Extruderstufe 1 ist in Verbindung mit dem Verfahren schon erläutert worden. Die Arbeitstemperaturen liegen zweckmäßigerweise über 170" C, finden aber vermutlich eine Grenze bei ca. 240 C aus den weiter oben erläuterten Gründen. Dazu weist also die erste Extruderstufe 1 im dargestellten Ausführungsbeispiel eine Heizeinrichtung auf. Demgegenüber kann die zweite Extruderstufe 4 eine Kühleinrichtung, beispielsweise in Form eines Gebläses, aufweisen, so daß eine Rückkühlung der plastifizierten Kunststoffmasse erfolgen kann, so daß diese dann anschließend in an sich bekannter Weise aus dem Folienblaskopf 7 ausgestoßen werden kann.

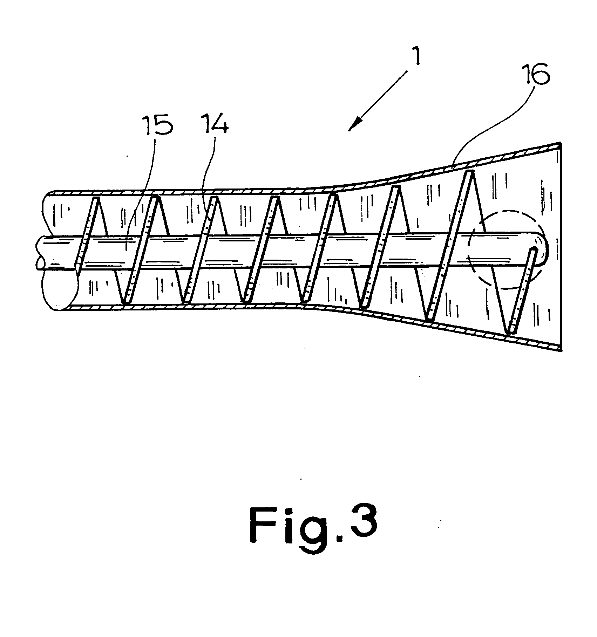

Fig. 3 zeigt in vergrößerter Darstellung, schematisch, wie in der ersten Extruderstufe 1 ein Anfangsbereich realisiert werden kann, der sich in Extrusionsrichtung im Förderquerschnitt verringert. Zunächst erfolgt diese Verringerung hier kontinuierlich, nämlich durch eine konische Gestaltung des Anfangsbereiches der Extruderstufe 1. Im dargestellten Ausführungsbeispiel ist das dadurch realisiert, daß die Extruderschnecke 14 sich bei im wesentlichen konstantem Durchmesser des Kerns 15 im Außendurchmesser entgegen der Extrusionsrichtung, also zum Eintritt der Extruderstufe 1 hin erweitert. Das Gehäuse 16 der Extruderstufe 1, das die Extruderschnecke 14 mit ihren Schneckengängen außen umgibt, erweitert sich entsprechend konisch im Innendurchmesser. Dadurch kann das Beschickungsaggregat auf einen großen Förderquerschnitt arbeiten, der in der Extruderstufe 1 selbst dann so erheblich verringert wird, daß die Dichte des Materialstromes und damit die Verarbeitungsdichte des Materials sich wunschgemäß hinreichend stark erhöht, um anschließend in der Extruderstufe 1 eine ausreichende Homogenisierung zur Erzielung eines perfekten Materialstromes zu gewährleisten.

Im dargestellten Ausführungsbeispiel sind die beiden Folienblasdüsen konzentrisch angeordnet und mit dem gleichfalls nicht dargestellten Hosenstück in einem Zweischicht-Schlauchfolien-Extrusionskopf zusammengefaßt.

Insgesamt ist natürliche eine Computer-Steuerung der gesamten Anlage vorgesehen. Für diese Steuerung, die an sich üblichen Methoden folgt, gilt lediglich als Besonderheit, daß der hier vorhandenen Dosierpumpe 6 ein Schmelzedruck-Meßgerät zur Erfassung des Schmelzedruckes vor der Dosierpumpe 6 zugeordnet ist.

Der Ablauf des Verfahrens auf der in Fig.1 und 2 dargestellten Anlage kann für das bevorzugte Ausführungsbeispiel wie folgt beschrieben werden:
Zunächst wird durch Waschen der Polyolefin-Kunststoffabfälle nach vorheriger Zerkleinerung auch sichergestellt, daß durch Abschöpfen der Schwimmfraktionen keine sogenannten Schwerfranktionen (die absinken) im Material verbleiben. Es ist weitgehend sichergestellt, daß dann nur Leichtfraktionen, wie HDPE, LDPE, LLDPE, PP etc. im Material verbleiben. Grundsätzlich gilt das erfindungsgemäße Verfahren für alle derartigen Kunststoffabfälle.

Sind die Leichtfraktionen von vornherein separiert, so kann ein Waschen unterbleiben, wenn das Ausgangsmaterial im wesentlichen sauber ist, also nur bei üblichem Abfall-Verpackungsmaterial auftretende geringere Verunreinigungen wie weiter oben beschrieben aufweist. Dann kann natürlich auch eine vorherige Trocknung entfallen.

Die geschnitzelten, also zerkleinerten Kunststoffabfälle werden in einen Materialbunker gefüllt, der das Material mittels eines Rührwerkes ständig locker hält. Im Anschluß an den Materialbunker befindet sich eine Stopfschnecke als Beschikkungsaggregat. Das Beschickungsaggregat selbst führt am Eintritt der ersten Extruderstufe 1 jedoch nur zu einer im Regelfall geringen Erhöhrung der Verarbeitungsdichte des Ausgangsmaterials, das ansonsten nicht vorverdichtet ist. Die wesentliche Erhöhung der Verarbeitungsdichte erfolgt in der ersten Extruderstufe 1 selbst, und zwar, wie zuvor beschrieben, dadurch, daß sich der Querschnitt des Materialstromes im Anfangsbereich der Extruderstufe 1 in Extrusionsrichtung fortschreitend erheblich verringert.

In der ersten Extruderstufe 1, die wie dargestellt horizontal angeordnet ist und eine Länge von beispielsweise 20 bis 30 D, insbesondere 23 D aufweist, wird das eingestopfte Material mit hoher Temperatur plastifiziert. Es handelt sich um einen Schneckenextruder mit mehreren Heizzonen, in dem im dargestellten Ausführungsbeispiel das Material auf eine gegenüber der üblichen Verarbeitungstemperatur von Polyolefin-Kunststoffen in Extrudern um 20 bis 40* höhere Temperatur aufgeheitzt wird (ca. 200 bis 210 C). Dadurch erreicht man, daß in der ersten Extruderstufe 1 die vergasungsfähigen Unreinheiten im Material insbesondere Farb-Rückstände, also Flexo-Druckfarben od. dgl., weitgehend vergasen. Am Ende der Extruderstufe 1 wird die heiße Masse durch einen Automatikfilter in der Filterstufe 2 hindurchgefiltert, durch den die feststoffartigen Unreinheiten aus dem Kunststoffmaterial herausgeholt werden.

Im Anschluß an die Filterstufe 2 wird die plastifizierte Kunststoffmasse um 90 umgelenkt und in einer Aufteilungsstufe (Düsenstufe) 3 durch die Mehrfachdüse mit einer Vielzahl von Düsenöffnungen ausgetragen. Die Kunststoffmasse fällt im freien Fall, aufgrund der Oberflächenspannung im Tropfenform, in die darunter liegenden Eintrittsöffnung 5 einer zweiten Extruderstufe 4. Gleichzeitig werden auch die gasförmigen Bestandteile der Kunststoffmasse aus der ersten Extruderstufe 1 ausgestoßen. Der Bereich der Entgasung ist durch ein Gehäuse 9 geschlossen, an eine Vakuum-Gasabsaugpumpe angeschlossen und wird dadurch auf einem Druck von unter 100 mbar gehalten. Die Entgasungseffekt ist dadurch optimal, - Verbindung von großer Oberfläche durch Tröpfchenform und niedrigem Außendruck im Gehäuse 9.

Die in die Eintrittsöffnung 5 der zweiten Extruderstufe 4 eintretende, nunmehr entgaste Kunststoffmasse wird in der zweiten Extruderstufe, die wiederum mit einem Schneckenextruder von etwa 23 D-Länge ausgerüstet ist, weiter plastifiziert und erneut homogenisiert. Im dargestellten und bevorzugten Ausführungsbeispiel wird die Kunststoffmasse im Schneckenextruder der zweiten Extruderstufe 4 auch noch etwas heruntergekühlt, um am Austritt die normale Verarbeitungstemperatur von Polyolefinen zu haben. Für den Fall eines erneuten Anfahrens der Anlage ist die Extruderstufe 4 auch noch mit einer zusätzlichen Heizeinrichtung ausgerüstet. Am Ende der zweiten Extruderstufe 4 tritt eine weitgehend homogene Masse aus. Das gilt jedenfalls dann, wenn das Ausgangsmaterial relativ homogen ist. Ist das nicht der Fall, so tritt zwar am Ende der Extruderstufe 4 eine homogene Masse aus, deren Druck schwankt aber materialbedingt relativ stark. Deshalb kann man dann hier die Dosierstufe 6 gut gebrauchen.

Die Dosierstufe 6, die im dargestellten Ausführungsbeispiel eingesetzt ist, arbeitet volumetrisch, also mit einer volumetrischen Dosierpumpe 6, insbesondere einer Zahnrad-Schmelzepumpe. Durch Messung des Pumpenvordruckes wird sichergestellt, daß der Pumpenvordruck auf einen Sollwert zurückgeregelt wird, und zwar durch Regelung der Leistung des Schneckenextruders der zweioten Extruderstufe 4, mit der im dargestellten Ausführungsbeispiel allerdings der Schneckenextruder der ersten Extruderstufe 1 ohnehin synchron angetrieben wird. Das eingangsseitig angeordnete, nicht dargestellte Stopfwerk kann dann beispielsweikse über die Stromaufnahme des ersten Extruders geregelt werden.

Im dargestellten Ausführungsbeispiel wird der plastifizierte Kunststoffstrom in einem Hosenstück zwischen der Dosierstufe 6 und dem Austrittskopf 7 in zwei Teilströme aufgeteilt. An jedem vom Hosenstück ausgehenden Zweig befindet sich eine von zwei einander zugeordneten Folienblasdüsen. Im dargestellten Ausführungsbeispiel handelt es sich um Schlauchfolien-Blasdüsen, die, konzentrisch angeordnet, in einem Zweischicht-Folienblaskopf 8 zusammengefaßt sind. Es handelt sich hier um einen Folienblaskopf für Schlauchfolienextrusion von Zweischicht-Schlauchfolien.

Die übrige Folienblas- und Abzugsanlage ist in üblicher Weise aufgebaut. Im hier dargestellten Ausführungsbeispiel ist eine Anlage zum Innenluftaustausch vorgesehen und mit einem 360 "-Wendekopf 10 kombiniert. Dazwischen sitzt ein Kalibrierkorb 11 zur Kalibrierung der Folienbirne. Die abgezogene Zweischicht-Schlauchfolie 12 wird dann einem Wickler 13 zugeführt mit Walzen-Wechselvorrichtung 14 etc.. Das sind aber übliche Ausrüstungsdetails von entsprechenden Anlagen. Insgesamt können mit der erfindungsgemäßen Anlage beispielsweise stark bedruckte PE- und PP-Folien mit Aufschäumung etc. als Rohmaterial verarbeitet werden, und zwar dann letztlich zu Rollenbeuteln für Müllentsorgung od. dgl.

Wie die Fig. 1 und 2 und die voranstehenden Erläuterungen zeigen, ist die dort beschriebene Anlage mit zweistufigem Aufbau relativ aufwendig. Auf diesen zweistufigen Aufbau mit dazwischen geschalteter Entgasungsstufe kann man jedoch dann verzichten, wenn man sehr "sauberes", also einheitliches Material als Ausgangsmaterial hat. Das gilt insbesondere unter den weiter oben erläuterten Randbedingungen. Eine derart vereinfachte Anlage, die mit nur noch einer Extruderstufe mit Schneckenextruder arbeitet, ist in Fig. 4 dargestellt. Ihre Funktionsweise entspricht dem in Anspruch 1 beschriebenen Verfahren. Hier schließt eben an die Extruderstufe 1 die Dosierstufe 6 (soweit erforderlich) direkt an bzw. bei Fehlen einer Dosierstufe 6 der Austrittskopf 7. Im übrigen darf auf die voranstehenden Ausführungen verwiesen werden.

## Patentansprüche

1. Verfahren zur Herstellung von Produkten aus Polyolefin-Kunststoffabfällen (HDPE, LDPE, LLDPE, PP etc.) und ähnlichen Kunststoff-Schwimmfraktionen, bei dem das vorbereitete, insbesondere vorzerkleinerte, vorzugsweise nicht vorverdichtete Ausgangsmaterial über ein Beschickungsaggregat einer Plastifikatorstufe zugeführt, in der Plastifikatorstufe plastifiziert und homogenisiert und der austretende plastifizierte Kunststoffstrom einem Austrittskopf zugeführt und aus diesem ausgestoßen wird, dadurch gekennzeichnet, daß das Verfahren für die Herstellung dünner Kunststoffolien dadurch eingerichtet ist, daß das Ausgangsmaterial in den Eintritt der eine Extruderstufe mit Schneckenextruder aufweisenden Plastifikatorstufe mittels des Beschickungsaggregates hineingedrückt wird, daß der Querschnitt des Materialstromes im Anfangsbereich der Extruderstufe mittels eines sich in Extrusionsrichtung verringernden Förderquerschnittes in Extrusionsrichtung fortschreitend erheblich verringert und dadurch die Dichte des Materialstromes fortschreitend erheblich erhöht wird und daß der plastifizierte und homogenisierte Kunststoffstrom in konstanten Volumenstrom dem Austrittskopf zugeführt und im Austrittskopf über einen Folienblaskopf in Foliendicke ausgestoßen wird.

2. Verfahren nach Anspruch 1, dadurch gekennzeichnet, daß am Ende der Extruderstufe die plastifizierte Masse durch eine Filterstufe geführt wird, in der nicht vergaste feststoffartige Unreinheiten aus der Masse herausgefiltert werden.

3. Verfahren nach Anspruch 2, dadurch gekennzeichnet, daß in der Extruderstufe das Ausgangsmaterial mit hoher Temperatur plastifiziert und dabei vergasungsfähige Unreinheiten im Material, insbesondere Farbrückstände, Flexo-Druckfarben etc. im Durchgang vergast werden, daß die plastifizierte und gefilterte Masse nach der Filterstufe zur Vergrößerung der Oberfläche vielfach aufgeteilt, vorzugsweise im freien Fall in eine Einfüllöffnung einer zweiten Extruderstufe mit Schneckenextruder geführt und in der zweiten Extruderstufe weiter plastifiziert und homogenisiert wird und daß der plastifizierte und homogenisierte Kunststoffstrom dann in konstantem Volumenstrom dem Austrittskopf zugeführt wird.

4. Verfahren nach einem der Ansprüche 1 bis 3, dadurch gekennzeichnet, daß mit im wesentlichen sauberem, also nur leichte Verschmutzungen aufweisendem, vorzugsweise nicht vorgereinigtem Ausgangsmaterial gearbeitet wird.

5. Verfahren nach einem der Ansprüche 1 bis 4, dadurch gekennzeichnet, daß das Ausgangsmaterial aus Polyolefin-Kunststoffabfällen niedriger und mittlerer bis höherer Dichte gemischt ist und vorzugsweise aus mehr als 40 % bis zu 100 % Polyolefin-Kunststoffabfällen niedriger Dichte, insbesondere LDPE, LLDPE, und dem Rest Polyolefin-Kunststoffabfällen mittlerer bis höherer Dichte, insbesondere HDPE, und gegebenenfalls weiteren Stoffen in geringer Menge besteht.

6. Verfahren nach Anspruch 3, ggf. auch nach Anspruch 4 oder 5, dadurch gekennzeichnet, daß die gefilterte Masse um 90° umgelenkt wird und/oder daß die gefilterte Masse durch eine Mehrfachdüse mit vorzugsweise nach unten weisenden Düsenöffnungen gepreßt wird.

7. Verfahren nach Anspruch 3 und ggf. einem der Ansprüche 4 bis 6, dadurch gekennzeichnet, daß das Material in der ersten Extruderstufe mit einer gegenüber der normalen Verarbeitungstemperatur von Polyolefinen erhöhten Temperatur plastifiziert und in der zweiten Extruderstufe auf eine normale Verarbeitungstemperatur rückgekühlt wird und, vorzugsweise, daß die höchste Materialtemperatur in der ersten Extruderstufe erheblich, vorzugsweise 20 bis 40* über der normalen Verarbeitungstemperatur von Polyolefinen liegt.

8. Verfahren nach Anspruch 3 und ggf. einem der Ansprüche 4 bis 7, dadurch gekennzeichnet, daß in der ersten Extruderstufe eine Zwischenentgasung stattfindet und/oder daß die Masse in Tröpfchen aufdosiert wird und/oder daß die Masse im freien Fall durch einen ständig auf niedrigem Innendruck gehaltenen Entgasungsschacht fällt.

9. Verfahren nach einem der Ansprüche 1 bis 8, dadurch gekennzeichnet, daß der plastifizierte Kunststoffstrom eingangs des Austrittskopfes in zwei Teilströme aufgeteilt wird und daß die beiden Teilströme über zwei einander zugeordnete Folienblasdüsen zur Bildung einer Zweischichtfolie ausgestoßen werden und, vorzugsweise, daß die Folienblasdüsen konzentrisch in Zweischichten-Schlauchfolienextrusion arbeiten.

10. Verfahren nach einem der Ansprüche 1 bis 8, dadurch gekennzeichnet, daß auf gleiche Weise zwei Kunststoffströme parallel erzeugt werden und jeder Kunststoffstrom einer Folienblasdüse von zwei für Zweischichten-Extrusion vorgesehenen Folienblasdüsen zugeführt wird.

11. Verfahren nach einem der Ansprüche 1 bis 10, dadurch gekennzeichnet, daß der Pumpenvordruck am Eintritt der Dosierstufe gemessen und die (zweite) Extrusionsstufe im Sinne einer Konstanthaltung des Pumpenvordruckes geregelt wird und, vorzugsweise, daß bei zweistufiger Ausführung die erste und die zweite Extrusionsstufe synchron miteinander geregelt werden.

12. Anlage zur Herstellung von Produkten aus Polyolefin-Kunststoffabfällen (HDPE, LDPE, LLDPE, PP etc.) und ähnlichen Kunststoff-Schwimmfratkionen, mit einem ggf. die Verarbeitungsdichte des Ausgangsmaterials erhöhenden Beschickungsaggregat, insbesondere in Form eines Stopfwerkes (Stopfschnecke), einer dem Beschickungsaggregat nachgeordneten Plastifikatorstufe und einem Austrittskopf für den plastifizierten Kunststoffstrom, dadurch gekennzeichnet, daß das Ausgangsmaterial mittels des Beschickungsaggregates in den Eintritt der Plastifikatorstufe hineindrückbar ist, daß die Plastifikatorstufe eine als Schneckenextruder ausgeführte Extruderstufe (1) aufweist, in der das Material plastifiziert und homogenisiert wird, daß die Extruderstufe (1) im Anfangsbereich einen sich in Extrusionsrichtung fortschreitend erheblich verringernden Förderquerschnitt aufweist, daß der Extruderstufe (1) als Austrittskopf (7) ein Folienblaskopf nachgeordnet ist, oder eine einen konstanten Volumenstrom abgebende Dosierpumpe (6), insbesondere in Form einer Zahnrad-Schmelzepumpe nachgeordnet ist und daß dieser dann als Austrittskopf (7) ein Folienblaskopf nachgeordnet ist.

13. Anlage nach Anspruch 12, dadurch gekennzeichnet, daß an die Extruderstufe (1) eine Filterstufe (2) angeschlossen ist, in der nicht vergaste feststoffartige Unreinheiten aus der Masse herausgefiltert werden, und, vorzugsweise, daß in der Filterstufe (2) ein Zwischenfilter für grobe Verunreinigungen vorgesehen und vorzugsweise als Lochring oder Lochscheibe mit Löchern von vorzugsweise 0,3 bis 0,5 mm im Durchmesser ausgeführt ist und, wiederum vorzugsweise, mit einer messerartig umlaufenden Abstreifkante, die über den Lochring bzw. die Lochplatte schabt, versehen ist.

14. Anlage nach Anspruch 13, dadurch gekennzeichnet, daß in der Extruderstufe (1) das Material bei hoher Temperatur plastifiziert wird, wobei vergasungsfähige Unreinheiten im Material, insbesondere Farbrückstände, Flexo-Druckfarben etc., im Durchgang vergast werden, daß an die Filterstufe (2) eine Aufteilungsstufe (3) zur vielfachen Aufteilung des Materialstromes angeschlossen ist, daß der Aufteilungsstufe (3) eine zweite Extruderstufe (4) in Form eines Schneckenextruders nachgeordnet ist, deren Eintrittsöffnung (5) mit erheblichem freiem Abstand von dem, insbesondere unter dem Austritt der Aufteilungsstufe (3) liegt und daß der zweiten Extruderstufe (4) dann ggf. die Dosierpumpe (6) und jedenfalls der Austrittskopf (7) nachgeordnet ist.

15. Anlage nach Anspruch 14, dadurch gekennzeichnet, daß die Aufteilungsstufe (3) eine Düsenstufe mit einer Mehrfachdüse mit nach unten weisenden Düsenöffnungen ist und, vorzugsweise daß die Extruderstufen (1, 4) horizontal angeordnet sind und die Aufteilungsstufe (3) einen Umlenkabschnitt zur 90 ° -Umlenkung des Kunststoffstroms vor der Mehrfachdüse aufweist und/oder die Mehrfachdüse ca. 20 bis 100, vorzugsweise etwa 50 Düsenöffnungen aufweist.

16. Anlage nach Anspruch 14 oder 15, dadurch gekennzeichnet, daß die Fallstrecke zwischen der Aufteilungsstufe (3) und der zweiten Extruderstufe (4) mittels eines Entgasungsgehäuses (9) geschlossen ist, daß, vorzugsweise, das Entgasungsgehäuse (9) an eine Vakuum-Gasabsaugpumpe angeschlossen ist und daß, vorzugsweise, die Vakuum-Gasabsaugpumpe auf einen Enddruck von unter 100 mbar ausgelegt ist.

17. Anlage nach einem der Ansprüche 12 bis 16, dadurch gekennzeichnet, daß die (erste) Extruderstufe (1) auf eine Temperatur erheblich über der normalen Verarbeitungstemperatur von Polyolefinen eingestellt ist, insbesondere über 170°, aber vorzugsweise unter 240° und/oder daß die zweite Extruderstufe (4) mit einer Kühleinrichtung und ggf. auch mit einer Heizeinrichtung ausgestattet ist.

18. Anlage nach einem der Ansprüche 12 bis 17, dadurch gekennzeichnet, daß die Extruderschnecke (14) der (ersten) Extruderstufe (1) im Anfangsbereich einen sich entgegen der Extrusionsrichtung erweiternden Außendurchmesser bei konstantem bzw. im wesentlichen konstantem Durchmesser des Kerns (15) aufweist.

19. Anlage nach einem der Ansprüche 12 bis 18, dadurch gekennzeichnet, daß zwischen der Dosierpumpe (6) und dem Austrittskopf (7) ein Hosenstück vorgesehen ist, durch das der Kunststoffstrom in zwei Teilströme aufteilbar ist, daß an jedem vom Hosenstück ausgehenden Zweig eine von zwei einander zugeordneten Folienblasdüsen angeschlossen ist und daß deren Ausgangsstrom zusammen über einen Zweischicht-Folienblaskopf (8) weiter verarbeitbar ist und, vorzugsweise, daß die beiden Folienblasdüsen im Zweischicht-Folienblaskopf (8) konzentrisch angeordnet und, vorzugsweise gemeinsam mit dem Hosenstück, in einem Zweischicht-Schlauchfolienblaskopf zusammengefaßt sind.

20. Anlage nach einem der Ansprüche 12 bis 18, dadurch gekennzeichnet, daß zwei separate Extrusionslinien vorgesehen sind und daß jede Extrusionslinie an eine von zwei einander zugeordneten Folienblasdüsen angeschlossen ist und daß deren Ausgangsstrom zusammen über einen Zweischicht-Folienblaskopf weiter verarbeitbar ist, wobei, vorzugsweise, die beiden Folienblasdüsen im Zweischicht-Folienblaskopf für Zweischicht-Schlauchfolienextrusion konzentrisch angeordnet sind.
